# FASCICULE DE BREVET EUROPEEN

(11) **EP 0 421 868 B1**
(45) Date de publication et mention de la délivrance du brevet: **28.06.1995**
(21) Numéro de dépôt: 90402723.2
(22) Date de dépôt: 02.10.1990
(51) Int. Cl.: C23C 8/36, G21C 3/06

(54) **Procédé d'oxydation superficielle d'une pièce en métal passivable, et éléments d'assemblage combustible en alliage métallique revêtus d'une couche d'oxyde protectrice**
Verfahren zum Aufbringen einer Oxidschicht auf einem passivierbaren Metall und Brennelemente aus einer beschichteten Legierung mit einer Oxidschutzschicht
Superficial oxidation of a piece of passive metal and combustible assembling elements of a metallic alloy coated with a protective oxide

(30) Priorité: 03.10.1989 FR 8912920
(43) Date de publication de la demande: 10.04.1991
(73) Titulaire: FRAMATOME, 92400 Courbevoie (FR); COGEMA, F-78141 Velizy Villacoublay (FR)
(72) Inventeur: Hertz, Domonique, F-69160 Tassin-La-Demi-Lune (FR)
(74) Mandataire: Bouget, Lucien

(56) Documents cités:
- EP-A- 0 016 909
- EP-A- 0 116 888
- EP-A- 0 305 241
- CH-C- 427 453
- DD-C- 54 863
- GB-A- 860 563
- US-A- 3 658 672
- CHEMICAL ABSTRACTS, vol. 101, no. 1, November 1984, page 280, abrégé no.196689c, Columbus, Ohio, US; & JP-A-59 118 886
- PATENT ABSTRACTS OF JAPAN, vol. 10, no. 362 (C-389)[2419], 4 décembre 1986; & JP-A-61 157 671
- PATENT ABSTRACTS OF JAPAN, vol. 10, no. 219 (C-363)[2275], 31 juillet 1986; & JP-A-61 56 273

## Description

L'invention concerne un procédé d'oxydation superficielle activée par plasma, d'au moins une zone d'une pièce en un métal ou alliage passivable tel que le zirconium, l'hafnium ou leurs alliages.

Les assemblages combustibles des réacteurs nucléaires refroidis par de l'eau sous pression ou par de l'eau bouillante sont constitués par des éléments combustibles appelés crayons maintenus dans une ossature rigide, de manière à constituer un faisceau dans lequel les crayons sont dans des dispositions parallèles.

Les crayons combustibles sont constitués par des gaines tubulaires généralement en alliage de zirconium, par exemple en Zircaloy 4, renfermant des pastilles en oxyde d'uranium ou de plutonium frittées empilées l'une à la suite de l'autre, dans la direction axiale de la gaine. La gaine est fermée de manière étanche par des bouchons en alliage de zirconium et les pastilles de combustible frittées sont placées à l'intérieur de la gaine, sous une atmosphère de gaz inerte sous pression.

L'ossature de l'assemblage est généralement constituée par des grilles entretoises transversales permettant de maintenir les crayons suivant un réseau régulier et par des tubes-guides longitudinaux fixés rigidement sur les grilles entretoises, au niveau de certaines cellules réservées pour le passage des tubes-guides.

L'assemblage combustible est généralement fermé à ses extrémités par des embouts fixés sur les extrémités des tubes-guides.

La plupart des éléments de l'ossature des assemblages combustibles des réacteurs refroidis à l'eau sont réalisés en alliage de zirconium.

Les éléments de réglage et d'arrêt du réacteur nucléaire comportent, le cas échéant, des barreaux d'hafnium allié ou non, gainés ou non, glissants dans les tubes-guides de l'assemblage.

Dans le réacteur nucléaire en fonctionnement, les assemblages combustibles subissent divers types d'attaque corrosive, sur leur surface en contact avec l'eau de refroidissement du réacteur ou sur leur surface en contact avec le combustible.

Les tubes de gainage des éléments combustibles qui sont traversés par un flux thermique important et qui sont en contact avec l'eau de refroidissement sur leur surface externe seulement sont principalement soumis à l'oxydation et aux diverses formes d'attaques dues à l'interaction entre les pastilles de combustible qui subissent un gonflement sous irradiation et la surface intérieure de la gaine.

Les éléments constituant l'ossature et en particulier les tubes-guides qui sont en contact avec l'eau de refroidissement sur leurs deux faces et qui ne sont pas traversés par un flux thermique important subissent principalement une hydruration sous l'effet de l'hydrogène qui se forme lors du contact à haute température entre l'eau de refroidissement et le zirconium constituant l'élément principal des composants de l'assemblage, selon la réaction :

Zr + 2H₂O → ZrO₂ + 2H₂.

Une partie de l'hydrogène formé par cette réaction est fixée par le métal constituant les composants de l'ossature dans lequel il peut précipiter sous forme d'hydrure.

Dans l'ambiance du réacteur, les composants des assemblages combustibles en alliage de zirconium se recouvrent d'une couche de zircone, selon la réaction chimique mentionnée ci-dessus.

La couche de zircone formée est susceptible de s'épaissir, en consommant de l'alliage de zirconium, en particulier dans le cas des tubes de gainage du combustible. L'oxyde formé étant de piètre conductivité thermique, la cinétique de corrosion sera d'autant plus élevée que l'épaisseur d'oxyde sera importante car cette cinétique est liée à la température d'interface métal-oxyde. L'épaisseur du métal constituant ces tubes de gainage peut alors devenir insuffisante pour assurer une tenue satisfaisante de l'élément combustible dans le réacteur.

En outre, l'hydrogène formé lors de l'oxydation du zirconium par l'eau de refroidissement se dégage au contact du métal du tube de gainage.

Dans le cas des éléments constituant l'ossature de l'assemblage, la couche de zircone formée en présence d'hydrogène sur ces éléments ne permet pas de limiter la diffusion de l'hydrogène et donc l'hydruration.

La pellicule d'oxyde naturel (quelques nanomètres) qui recouvre les éléments en hafnium peut se détériorer sous l'effet du frottement de ces éléments les uns sur les autres ou sur leur gainage. Elle ne peut plus alors assurer de protection contre l'hydruration par l'hydrogène qui vient du milieu primaire et traverse le gainage d'acier inoxydable. Cette hydruration de l'hafnium provoque un gonflement du métal qui peut atteindre 15 % en volume et nécessiter le remplacement prématuré des éléments ainsi affectés.

On ne connaissait pas jusqu'ici de procédé permettant de protéger de manière efficace les éléments constituant les assemblages combustibles des réacteurs nucléaires refroidis à l'eau, en alliage de zirconium ou, de manière générale, en un autre métal ou alliage passivable tel que le hafnium et ses alliages.

Le but de l'invention est donc de proposer un procédé de protection par oxydation superficielle d'au moins une zone d'une pièce en un métal ou alliage passivable constitué par l'un des métaux : zirconium et hafnium permettant de constituer sur cette pièce une couche d'oxyde mince et stable améliorant la résistance à la corrosion du métal ou alliage passivable.

Dans ce but, on active par un plasma électrique ou micro-onde, un gaz renfermant de l'oxygène, de manière à créer des éléments chimiques activés dans ce gaz, et on met en contact le gaz activé par la décharge électrique avec la zone de la pièce à oxyder, la pièce étant portée à une température comprise entre 350 et 1050°C, dans la zone dans laquelle on réalise l'oxydation.

De manière préférentielle, on produit une décharge électrique dans des conditions d'intensité et de tension correspondant à la décharge luminescente anormale, dans un gaz renfermant de l'oxygène, à une pression comprise entre 132 et 660 Pa (1 et 5 torr), de manière à créer des éléments chimiques activés dans ce gaz et on met en contact le gaz activé par la décharge électrique avec la zone de la pièce à oxyder, la pièce étant à un potentiel cathodique et à une température comprise entre 350 et 650°C, dans la zone dans laquelle on réalise l'oxydation. La pièce à oxyder est placée dans une enceinte portée à un potentiel anodique et renfermant un gaz contenant de l'oxygène sous une pression comprise entre 132 et 660 Pa (1 et 5 torr) et on porte à un potentiel cathodique de 500 à 1000 volts la pièce à oxyder, de manière à créer une décharge luminescente anormale dans le gaz au contact de la pièce et à obtenir un plasma activé au contact de la surface à oxyder de la pièce.

Afin de bien faire comprendre l'invention, on va maintenant décrire, à titre d'exemples non limitatifs, en se référant aux figures jointes en annexe, un mode de mise en oeuvre du procédé suivant l'invention pour réaliser l'oxydation superficielle de tubes de grande longueur tels que des tubes-guides d'un assemblage combustible d'un réacteur nucléaire à eau sous pression et un mode de mise en oeuvre du procédé suivant l'invention pour réaliser l'oxydation superficielle de grilles d'assemblage combustible.

La figure 1 représente une vue en coupe par un plan vertical d'une installation dans laquelle on réalise l'oxydation superficielle de tubes-guides d'un réacteur nucléaire.

La figure 2 représente une vue en coupe par un plan vertical d'une installation dans laquelle on réalise l'oxydation superficielle de grilles d'assemblage combustible.

### Exemple 1

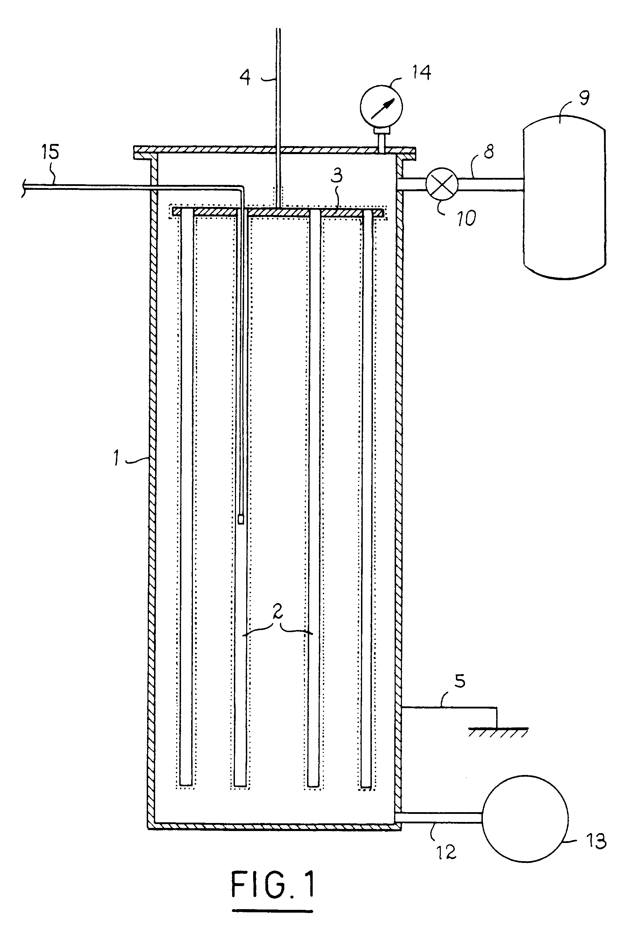

L'installation représentée sur la figure 1 comporte une enceinte 1 ayant une paroi métallique de grande longueur, de l'ordre de 4.50 m, de manière à pouvoir recevoir des tubes 2 en Zircaloy 4 d'une longueur supérieure à 4 m, tels que des tubes de gainage d'assemblages combustibles pour réacteur nucléaire à eau pressurisée ou tels que des tubes-guides.

Les tubes 2 sont suspendus à l'intérieur de l'enceinte, par l'intermédiaire d'un support conducteur 3 relié à une borne d'un générateur de courant électrique, par l'intermédiaire d'un conducteur électrique 4 de grande section. La paroi de l'enceinte 1 est reliée à un câble de mise à la terre 5.

Le volume intérieur de l'enceinte 1 est relié par l'intermédiaire d'une conduite 8 à un réservoir ou à un circuit de distribution 9 permettant d'envoyer un mélange gazeux renfermant de l'oxygène dans l'enceinte 1, avec un débit parfaitement contrôlé. Une vanne d'isolation 10 permet d'isoler le circuit 9 de l'enceinte 1.

A son extrémité opposée à l'extrémité reliée à la conduite 8, l'enceinte 1 est reliée, par l'intermédiaire d'une seconde conduite 12, à une pompe à vide 13 permettant d'établir un vide primaire dans l'enceinte 1.

Un manomètre 14 permet de déterminer la pression des gaz dans l'enceinte 1 et un ensemble de thermocouples tels que 15, la température au niveau de la paroi des tubes dont on effectue l'oxydation ionique.

L'enceinte 1 comporte un couvercle permettant d'introduire les tubes à oxyder 2 fixés sur leur support dans le volume intérieur de l'enceinte. Le couvercle est muni de moyens de fermeture étanche.

Après fermeture de l'enceinte, un vide primaire est établi dans celle-ci grâce à la pompe 13.

On introduit dans l'enceinte un gaz inerte tel que de l'argon, grâce au circuit de distribution 9. La pression d'argon dans l'enceinte est maintenue à une valeur faible comprise entre 132 et 660 Pa (entre 1 et 5 torr).

Le support 3 et les tubes 2 sont portés à un potentiel cathodique compris entre -500 et -1000 volts par rapport à l'enceinte.

La surface des tubes 2 subit un bombardement ionique intense réalisant le décapage de la surface externe des tubes 2 et le chauffage progressif de ces tubes.

On introduit dans l'enceinte, grâce au circuit 9 et à la conduite 10, un mélange d'argon et d'oxygène contenant une proportion volumique d'oxygène de 10 à 100 %.

Une circulation du mélange gazeux dans l'enceinte 1 est maintenue à un débit relativement faible et constant.

La pression dans l'enceinte est réglée à une valeur comprise entre 132 et 660 Pa (entre 1 et 5 torr).

De préférence, la pression totale dans l'enceinte est maintenue à une valeur de 436 Pa (3,3 torr).

La tension cathodique du support 3 et des tubes 2 et la densité de courant sont maintenues à des valeurs qui correspondent aux conditions de la décharge luminescente anormale dans le gaz sous pression réduite entourant les tubes. La décharge luminescente anormale correspond à la zone de la courbe densité de courant en fonction de la tension électrique dont l'allure est linéaire et qui précède l'apparition du régime d'arc.

Ce régime de décharge électrique est parfaitement connu des spécialistes et utilisé en particulier dans le cas des traitements de durcissement des métaux par nitruration ionique.

Les tubes sont à un potentiel négatif compris entre -500 et -1000 volts par rapport à la paroi du réacteur. La paroi extérieure des tubes est recouverte, sur une épaisseur faible, par l'effluve électrique constituée par un plasma dans lequel se forment des espèces chimiques activées.

Dans les conditions définies, la plus grande partie de la chute de tension se produit dans un espace enveloppant la cathode (c'est-à-dire les tubes) sur une épaisseur comprise entre quelques dizièmes et quelques millimètres. Cette épaisseur dépend de la pression et de la nature du gaz remplissant l'enceinte et de la nature du métal constituant la pièce dont on réalise l'oxydation ionique.

Les tubes 2 sont donc entourés de manière uniforme par un plasma renfermant des ions gazeux ou d'autres espèces chimiques activées qui sont accélérés par le champ intense qui règne au voisinage des tubes 2 et produisent ainsi un bombardement de la surface extérieure des tubes.

Les tubes sont donc traités de manière homogène sur toute leur surface, pendant toute la durée du traitement.

Le bombardement ionique fournit aux tubes 2 une puissance de l'ordre de plusieurs watts/cm², si bien que les tubes continuent à s'échauffer jusqu'à une température correspondant à l'émission thermo-électronique.

Sous l'effet du bombardement ionique, des ions métalliques sont éjectés des tubes constituant la cathode. Il se produit donc un décapage en continu des tubes pendant le traitement en présence d'argon et d'oxygène, ce qui améliore la compacité de la coucheen cours de formation.

En outre, des ions gazeux s implantent dans la surface de la paroi des tubes sur une épaisseur correspondant à quelques distances atomiques, si bien que cette zone superficielle très mince du tube s'enrichit en oxygène, l'oxygène diffusant ensuite à l'intérieur de la paroi sous l'effet de la température élevée à laquelle est porté le tube.

On obtient ainsi progressivement une couche d'oxyde dont l'épaisseur s'accroît pour atteindre une valeur de l'ordre du micromètre au bout de quelques heures.

La couche d'oxyde obtenue est très dense, homogène et stable.

On a pu montrer, par la diffraction de rayons X, que cette couche est principalement constituée par de l'oxyde de zirconium ZrO₂ de structure monoclinique.

On a utilisé un dispositif de chauffage d'appoint de l'enceinte de traitement non représenté sur la figure qui permet de porter la température des tubes à une valeur voulue, indépendamment du bombardement ionique.

On a pu faire divers essais d'oxydation superficielle de tubes en Zircaloy 4 à des températures variant entre 350 et 550°, pendant des durées allant jusqu'à 25 heures.

On a rassemblé dans le tableau ci-dessous les conditions opératoires et l'épaisseur de la couche d'oxyde obtenue sur un tube en Zircaloy 4.

**TABLEAU**

| Durée en h | Température en °C | Pression partielle de l'oxygène (en Pa) | Epaisseur couche d'oxyde |
|---|---|---|---|
| 5 | 350 | 44 | < 1» |
| 5 | 400 | 44 | < 1» |
| 5 | 450 | 44 | < 1» |
| 5 | 550 | 44 | 4» |
| 4 | 400 | 110 | 0,3» |
| 4 | 450 | 110 | 0,5» |
| 4 | 480 | 110 | 0,7» |
| 5 | 450 | 100 | |
| 25 | 400 | 44 | 1» |
| 25 | 450 | 44 | 3» |
| 25 | 550 | 44 | 6» |

Il apparaît que la pression partielle d'oxygène dans le mélange gazeux a une influence faible ainsi que la durée du traitement pour les températures les plus élevées.

On obtient une couche d'un ou plusieurs micromètres d'épaisseur parfaitement uniforme pour des températures généralement comprises entre 400 et 550°C.

Les couches d'oxyde formées entre 350°C et 450°C présentent un interface oxyde/substrat en alliage de zirconium extrêmement net alors que les couches d'oxyde formées à 550° présentent un interface étendu correspondant à une couche de diffusion de l'oxygène.

### Exemple 2

On peut également produire l'activation des espèces oxygène en amont du réacteur d'oxydation par un plasma micro-onde ou une décharge électrique.

En effet, dans le cas de l'oxydation, les espèces actives formées dans le plasma ont une longue durée de vie et peuvent être transportées vers une zone où elles interagissent avec un substrat.

Cette technique désignée sous le nom de "post-décharge" n'est pas possible dans le cas de la nitruration et présente une très grande utilité dans le cas de surfaces à oxyder au voisinage desquelles il est difficile de produire un plasma par décharge électrique.

Il en est ainsi dans le cas de la surface intérieure des tubes de gainage ou des tubes-guides des assemblages combustibles, ces tubes ayant une longueur supérieure à 4 m et un diamètre intérieur de l'ordre de 8 mm et des grilles d'assemblage combustible dont les cellules mesurent 15 mm et moins.

Le traitement d'oxydation ionique avec "post-décharge" a été effectué sur les surfaces intérieure et extérieure de grilles d'assemblage.

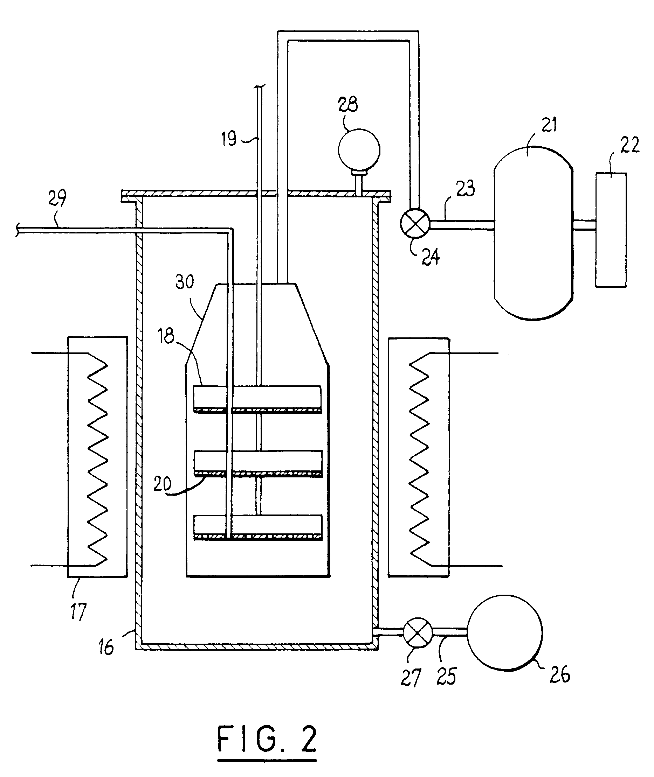

L'installation représentée sur la figure 2 comporte une enceinte 16 chauffée par un four 17 de taille suffisante pour disposer les pièces à traiter 18 dans une zone où le gradient thermique est faible.

Les pièces à traiter sont posées sur un support 19 dont les plateaux perforés 20 laissent passer les gaz.

Les gaz oxydants activés sont produits par un plasma électrique ou micro-onde dans un activateur 21 alimenté par un circuit de distribution d'argon et d'oxygène 22 permettant de contrôler parfaitement les débits d'espèces actives introduites dans le réacteur par la conduite 23. Une vanne d'isolation 24 permet d'isoler le circuit 9 de l'enceinte 16. Le gaz est guidé vers les pièces à traiter par les écrans 30.

A l'extrémité opposée de l'enceinte, par l'intermédiaire d'une seconde conduite 25, une pompe à vide 26 permet d'établir un vide primaire dans l'enceinte. Une vanne 27 permet de régler la pression dans l'enceinte, contrôlée par un manomètre 28.

Des thermocouples 29 permettent de contrôler la température à l'intérieur de l'enceinte.

L'enceinte comporte un couvercle muni de fermetures étanches.

Après fermeture de l'enceinte, on établit un vide primaire et on porte les pièces à la température de dépôt soit 350 à 550°C grâce au four 17. Le générateur d'espèces activées étant en fonctionnement, on introduit ces espèces (argon + 1 à 10 % oxygène) dans le réacteur en réglant la pression à l'aide des vannes 24 et 27 à la pression de travail choisie (660 à 66.000 Pa (5 à 500 torrs)) suivant la forme des pièces à traiter.

Dans ces conditions, l'oxygène actif réagit avec la surface des métaux passivables et diffuse sous l'effet thermique pour former la couche d'oxyde protectrice. Dès que cette couche est importante, elle diminue l'affinité entre le métal sous jacent et l'oxygène activé dans la phase gazeuse en sorte que l'oxydation se ralentit à cet endroit et les espèces activées sont disponibles pour réagir plus loin.

On obtient donc ainsi progressivement une couche d'oxyde dont l'épaisseur atteint quelques micromètres après 5 à 25 heures.

La couche d'oxyde obtenue est dense et constituée de zircone monoclinique et quadratique (ou cubique).

On a pu faire divers essais d'oxydation superficielle de tubes et feuillards en Zircaloy 4 à des températures variant de 350 à 650°C pendant des durées allant jusqu'à 100 heures.

Les conditions opératoires et l'épaisseur de couche d'oxyde obtenues sont rassemblées dans le tableau suivant

Les tubes traités à 600 et 640° ont subi une recristallisation partielle.

| Durée en h | Température en °C | Composition du gaz | Epaisseur du revêtement |
|---|---|---|---|
| 2 | 500 | Ar + 3% O₂ | 1,2 » |
| 2 | 600 | Ar + 3% O2 | |
| 2 | 640 | Ar + 3% O2 | 3,5 » |
| 100 | 400 | Ar + 1% O2 | 1,5 » |
| 20 | 450 | Ar + 1% O2 | 1,5 » |
| 5 | 500 | Ar + 1% O2 | 1,5 » |

On a effectué des essais de corrosion en autoclave sur les tubes traités par le procédé d'oxydation ionique.

Les essais ont été conduits dans un autoclave contenant de l'eau à 360° et à une pression de 190 bars pendant une période d'un mois et dans un autoclave contenant de la vapeur à 400° et 415°C sous une pression de 103 bars, pendant des périodes jusqu'à 250 jours.

Dans le cas de tous les tubes testés, l'oxydation ionique ou post-décharge entraîne une diminution de la corrosion comprise entre 28 et 65 %. La corrosion est mesurée par la prise de poids d'échantillons soumis au séjour en autoclave dans les conditions indiquées.

L'invention ne se limite pas aux modes de réalisation qui ont été décrits.

C'est ainsi qu'on peut utiliser au lieu d'un mélange argon/oxygène, d'autres gaz contenant de l'oxygène, tels que l'oxygène pur ou un mélange oxygène/helium.

On peut utiliser des températures de traitement différentes de celles qui ont été citées. Ces températures, dans le cas des alliages d'hafnium, sont supérieures à 450°C et peuvent aller jusqu 'à 1000°C environ. En effet, la diffusion de l'oxygène dans l'hafnium étant beaucoup plus lente que dans les alliages de zirconium, il faudrait des traitements très longs pour obtenir des couches d'oxydes significatives. En revanche, l'hafnium ne commence à recristalliser que vers 700°C (une recristallisation complète exigeant au moins 2 heures à 800°C).

En outre, le changement de structure d'hexagonal compact à cubique faces centrées n'intervient que vers 1750°C. C'est pourquoi la température de traitement peut être plus élevée que dans le cas du zirconium et de ses alliages. Toutefois, il ne faudrait pas dépasser 1050°C en particulier pour les alliages contenant quelques centaines de ppm de fer car on risquerait alors une fragilisation.

Il est possible, dans le cas de la fabrication des assemblages combustibles, de réaliser la mise en oeuvre du traitement ionique dans le four de traitement thermique des tubes de gainage ou des éléments constituant l'ossature de l'assemblage.

Il est également possible de réaliser le traitement sur des ossatures d'assemblages combustibles après leur montage.

Il est également possible d'utiliser le procédé suivant l'invention pour réaliser l'oxydation ionique avec ou sans "post-décharge" de tout élément en alliage de zirconium utilisé dans un réacteur nucléaire tel qu'un réacteur nucléaire à eau sous pression.

Le traitement suivant l'invention peut être appliqué à des pièces en alliage de zirconium dans un état métallurgique ou mécanique quelconque.

On peut en particulier appliquer le procédé suivant l'invention au cas des pièces détensionnées, recristallisées, trempées en surface ou à coeur, à l'état brut de décapage ou dont la surface a été brossée ou polie.

De manière générale, on peut utiliser le procédé de traitement suivant l'invention dans le cas d'alliages passivables tels que des alliages de zirconium et des alliages d'hafnium, utilisés dans l'industrie nucléaire, dans l'industrie chimique ou dans toute autre branche de l'industrie.

Le traitement suivant l'invention peut être utilisé non seulement pour limiter la corrosion des pièces traitées mais encore pour diminuer la sensibilité au grippage et à l'usure de pièces mécaniques en métal passivable.

## Revendications

1. Procédé de protection par oxydation superficielle d'au moins une zone d'une pièce en un métal ou alliage passivable constitué par l'un des métaux : zirconium et hafnium et leurs alliages, caractérisé par le fait :
- qu'on active par un plasma électrique ou micro-onde un gaz renfermant de l'oxygène, de manière à créer des éléments chimiques activés dans ce gaz,
- et qu'on met en contact le gaz activé par la décharge électrique avec la zone de la pièce à oxyder, la pièce étant portée à une température comprise entre 350 et 1050°C dans la zone dans laquelle on réalise l'oxydation.

2. Procédé d'oxydation suivant la revendication 1, caractérisé par le fait que la pièce (2) à oxyder est placée à l'intérieur d'une enceinte (1) renfermant un gaz contenant de l'oxygène à une pression comprise entre 132 et 660 Pa (1 et 5 torr), et portée à un potentiel électrique de -500 à -1000 volts par rapport à l'enceinte (1) pour réaliser une décharge luminescente anormale au voisinage de la surface à oxyder des pièces (2) à l'intérieur de l'enceinte (1) et une oxydation des pièces sous l'effet des espèces chimiques activées par la décharge électrique.

3. Procédé d'oxydation suivant la revendication 1, caractérisé par le fait qu'on produit la décharge électrique dans le gaz renfermant de l'oxygène dans une zone éloignée des pièces (2) à traiter et qu'on transporte le gaz activé par la décharge électrique pour le mettre en contact avec la surface (2) des pièces à traiter.

4. Procédé d'oxydation suivant l'une quelconque des revendication 1 à 3, caractérisé par le fait que la pièce (2) à traiter en Zirconium ou alliage de zirconium est à une température comprise entre 350 et 650°C.

5. Procédé suivant la revendication 4, caractérisé par le fait que la température de la pièce est comprise entre 400 et 550°C.

6. Procédé suivant l'une quelconque des revendications 1 à 3, caractérisé par le fait que la pièce en hafnium allié ou non est portée à une température comprise entre 450 et 1000°C.

## Claims

1. Process for protecting, by superficial oxidation, at least one zone of a component made of a passive metal or alloy consisting of one of the metals zirconium and hafnium and the alloys thereof, characterised in that a gas containing oxygen is activated by an electrical plasma or microwave so as to create activated chemical elements in this gas, and the gas activated by the electrical discharge is brought into contact with the zone of the component which is to be oxidised, the component being heated to a temperature between 350 and 1050°C in the zone in which the oxidation is carried out.

2. Oxidising process according to claim 1, characterised in that the component (2) to be oxidised is placed inside an enclosure (1) containing a gas which contains oxygen at a pressure of between 132 and 660 Pa (1 and 5 torr) and raised to an electrical potential of -500 to -1000 volts relative to the enclosure (1) in order to bring about an abnormal luminescent discharge in the vicinity of the surface of the components (2) which is to be oxidised inside the enclosure (1) and oxidation of the components under the effect of the chemical species activated by the electrical discharge.

3. Oxidation process according to claim 1, characterised in that the electrical discharge is produced in the oxygen-containing gas in a zone remote from the components (2) which are to be treated and the gas activated by the electrical discharge is transported in order to bring it into contact with the surface (2) of the components to be treated.

4. Oxidation process according to any one of claims 1 to 3, characterised in that the component (2) to be treated, made of zirconium or zirconium alloy, is at a temperature of between 350 and 650°C.

5. Process according to claim 4, characterised in that the temperature of the component is between 400 and 550°C.

6. Process according to any one of claims 1 to 3, characterised in that the component made of alloyed or unalloyed hafnium is heated to a temperature of between 450 and 1000°C.

## Patentansprüche

1. Verfahren zum Schutz wenigstens eines Bereiches eines passivierbaren Metalls oder einer passivierbaren Legierung durch Oberflächenoxidation, wobei das Material aus einem der Metalle: Zirkonium und Hafnium und deren Legierung besteht,
dadurch gekennzeichnet, daß:
- durch ein elektrisches oder Mikrowellenplasma ein Gas, welches Sauerstoff einschließt, aktiviert wird, derart, daß chemisch aktive Elemente in diesem Gas erzeugt werden, und daß
- das durch elektrische Entladung aktivierte Gas mit dem zu oxidierenden Bereich des Teils in Kontakt gebracht wird, wobei das Teil auf eine Temperatur zwischen 350 und 1050 °C in dem Bereich gebracht wird, in dem die Oxidation erzeugt wird.

2. Oxidationsverfahren nach Anspruch 1, dadurch gekennzeichnet, daß das zu oxidierende Teil (2) im Inneren eines Behälters (1) angeordnet ist, der ein Gas umschließt, welches Sauerstoff enthält bei einem Druck zwischen 132 und 660 Pa (zwischen 1 und 5 Torr), und welches auf ein elektrisches Potential von -500 bis -1000 V relativ zum Behälter (1) aufgeladen ist, um eine anormale luminiszente Entladung in der Nähe der zu oxidierenden Oberfläche der Teile (2) im Inneren des Behälters (1) und eine Oxidation der Teile unter Einwirkung der durch die elektrische Entladung aktivierten chemischen Bestandteile zu bewirken.

3. Oxidationsverfahren nach Anspruch 1, dadurch gekennzeichnet, daß die elektrische Entladung in dem Sauerstoff enthaltenden Gas in einen von den zu behandelnden Teilen (2) entfernten Bereich durchgeführt wird und das durch die elektrische Entladung aktivierte Gas transportiert wird, um es in Kontakt mit der Oberfläche (2) der zu behandelnden Teile zu bringen.

4. Oxidationsverfahren nach einem der Ansprüche 1 bis 3, dadurch gekennzeichnet, daß das zu behandelnde Teil (2) aus Zirkonium oder einer Zirkoniumlegierung besteht und eine Temperatur zwischen 350 und 650 °C aufweist.

5. Verfahren nach Anspruch 4, dadurch gekennzeichnet, daß die Temperatur des Teils zwischen 400 und 550 °C liegt.

6. Verfahren nach einem der Ansprüche 1 bis 3, dadurch gekennzeichnet, daß das Teil aus legiertem oder nicht legiertem Hafnium besteht und auf eine Temperatur zwischen 450 und 1000 °C gebracht ist.
